# EUROPEAN PATENT APPLICATION

(11) **EP 2 426 648 A1**
(43) Date of publication of application: **07.03.2012**
(21) Application number: 10174846.5
(22) Date of filing: 01.09.2010
(51) Int. Cl.: G07C 5/08

(54) **A driver behavior diagnostic method and system**

(71) Applicant: Key Driving Competences, 3001 Heverlee (BE)
(72) Inventor: The designation of the inventor has not yet been filed
(74) Representative: BiiP cvba

(57) **Abstract**

The present invention is related to a driver behavior diagnostic method comprising sampling event signal values associated with a vehicle and analyzing the event signal values; characterized in that sampling the event signal values comprises buffering them over a limited buffer time and that analyzing said event signal values comprises reconstructing events based on the buffered event signal values.

Further, the present invention is related to a driver behavior diagnostic system comprising a sampling means for sampling event signal values associated with a vehicle and an analyzing means for analyzing the event signal values; characterized in that said sampling means comprises a buffer for buffering event signal values for a limited buffer time and that said analyzing means is adapted for reconstructing events based on the buffered event signal values.

## Description

### FIELD OF THE INVENTION

The present invention relates to a driver behavior diagnostic method comprising sampling event signal values associated with a vehicle and analyzing the event signal values.

Further, the present invention is related to a driver behavior diagnostic system comprising a sampling means for sampling event signal values associated with a vehicle and an analyzing means for analyzing the event signal values.

### BACKGROUND OF THE INVENTION

When operating a vehicle, the way that a driver controls the vehicle can be defined as the combination of the application of acquired technical skills (as a result of training and/or experience) and the attitude of the driver.

An assessment of these skills and attitude can happen in an actual vehicle or in a simulated environment, and can be performed by a human observer or by analysis of vehicle-generated data.

It is obvious that observation by human observers requires considerable time, costs and experience. Moreover, this way of assessment suffers from a considerably degree of subjectivity due to differences in driving behavior in the presence of the human observer compared to driving behavior when the observer is not present.

Therefore, automated methods are developed wherein driver behavior data are collected by implementing data collection devices in the vehicles which collect vehicle usage statistics. These data can subsequently either be interpreted by human assessors, being likewise time-consuming, expensive, and requiring sufficient experience, either be analyzed using driver behavior diagnostic software.

An example of an automated state-of-the-art driver behavior diagnostic system and method using such data collection device and such driver behavior diagnostic software is Squarell Truck Performance Monitor V108 including a data logger connected to the vehicle CAN bus system and dedicated analysis software wherein gathered vehicle data are analyzed amongst other by comparing them to normative sets.

Another example of an automated state-of-the-art driver behavior diagnostic system and method is described in W02007133986, wherein driving event data are continuously buffered in event capture devices, and wherein the output of sensors in the vehicle is coupled with an event detector and compared to a threshold value. Upon identification of the threshold value in the output of the sensors, the event detector sends a signal to the event capture devices sending on its turn corresponding driving event data to the event detector.

However, such state-of-the-art automated driver behavior diagnostic systems and methods which can be implemented in a permanent fashion using in-vehicle devices have significant disadvantages.

A main disadvantage is that evaluation of the driver behavior is based on absolute thresholds (e.g. fixed thresholds for acceleration, vehicle speed, engine speed), or on normative sets (e.g. mean average calculations based on other vehicle's and/or other driver's event data), while variables having an influence on driver behavior such as vehicle features and technology, physical and meteorological environment and interaction with other road users are not taken in account. This makes it very hard to evaluate the driver skills and attitude in an objective way.

Moreover, if one would consider to indeed take in account variables influencing driver behavior, either the event data have to be interpreted by a human assessor knowledgeable of these influencing variables, which is generally only possibly when the assessor was present during the trip, and able to objectively interpret its impact on driver behavior, either the circumstances of the trip have to be standardized or well-known by for example fixing the route or fixing meteorological conditions.

Further, in case of a large fleet of vehicles, the large amount of data linked to specific variables such as vehicle features and technology, physical and meteorological environment and interaction with other road users would make it very difficult to follow-up on the whole group of vehicles and drivers.

Considering the above, as a first object the present invention provides a fully automated assessment of driver skills and attitude, based on the analysis of vehicle-generated data without the need of a human assessor to interpret quantitative data or environment variables.

As a second object, the present invention provides an objective assessment of driver skills and attitude under variable conditions having an influence on driver behavior such as vehicle features and technology, physical and meteorological environment and interaction with other road users.

As another object, the present invention enables permanent and automated monitoring of driver skills and attitude on a large scale with minimal to no human intervention.

Another object of the present invention is to provide a method and system where only a limited set of quantitative and objective vehicle data is needed and which is generally available on current vehicles without the need to install specialized sensors.

The present invention meets the above objects by buffering event signal values over a limited buffer time and reconstructing events based on the buffered event signal values.

### SUMMARY OF THE INVENTION

The present invention is directed to a driver behavior diagnostic method comprising sampling event signal values associated with a vehicle and analyzing the event signal values;
characterized in that sampling the event signal values comprises buffering them over a limited buffer time and that analyzing said event signal values comprises reconstructing events based on the buffered event signal values.

Further, the present invention is directed to a driver behavior diagnostic system comprising a sampling means for sampling event signal values associated with a vehicle and an analyzing means for analyzing the event signal values;
characterized in that said sampling means comprises a buffer for buffering event signal values for a limited buffer time and that said analyzing means is adapted for reconstructing events based on the buffered event signal values.

### BRIEF DESCRIPTION OF THE DRAWINGS

FIG 1 schematically illustrated a "sliding window" used in a method and system in accordance with the present invention
FIG 2 schematically illustrated an event log used in a method and system in accordance with the present invention
FIG 3 illustrated a process flow for generating an event queue used in a method and system in accordance with the present invention
FIG 4 schematically illustrated an multidimension histogram tree used in a method and system in accordance with the present invention

### DESCRIPTION OF THE INVENTION

According to a first embodiment of the present invention, a driver behavior diagnostic method is provided comprising sampling event signal values associated with a vehicle and analyzing the event signal values; characterized in that sampling the event signal values comprises buffering them over a limited buffer time and that analyzing said event signal values comprises reconstructing events based on the buffered event signal values.

Implementing a buffer mechanism that contains sampled event signal values over a limited time period (also called "sliding window") and reconstructing events based on the buffered event signal values allows investigation of the signal value stream over a time period, deducing more information from the historical signal value stream and enriching the significance of the reconstructed events. For example, it can be computed how long a brake pedal was depressed and what the deceleration was that resulted from this action.

As a consequence, in the context of the present invention the term event is not understood as a data set at a point in time where a certain threshold is reached, but rather as a sequence of data sets covering at least part of an action or preferably a complete action the driver performed.

Such event has a specific start and end time during the measurement, and contains a number of statistics depending on the type of event. These statistics can include event signal values at specific times of the event, signal statistics for values that are updated during the event, or computed values based on the sliding window at specific times of the event and statistics based on these values.

A further advantage of the invention is that, due to the fact that an event may be a reconstruction in time from start to end of a driver's action and that not just the point in time where a threshold is reached is taken in account, a more objective assessment of driver skills and attitude may be possible, even under variable conditions having an influence on driver behavior such as vehicle features and technology, physical and meteorological environment and interaction with other road users.

In an embodiment in accordance with the present invention, a driver behavior diagnostic method is provided wherein reconstructing events may comprise generating an event queue by means of a function triggering the creation of a new event in the event queue.

In the context of the present invention, such event queue is understood as a sequence of events. This sequence of events may be automatically generated by using a function triggering the creation of a new event. This may allow a fully automated assessment of driver skills and attitude based on the analysis of vehicle-generated event signal values without the need of a human assessor to interpret quantitative data or environment variables. Obviously, such automated assessment may enable permanent and automated monitoring of driver skills and attitude on a large scale with minimal to no human intervention, and may provide instant feedback to drivers that can be interpreted without specialized knowledge.

Preferably, in such queue one single event can occur at any given time. In a contiguous event queue, there is always one single event at a given time, i.e. there are no gaps between events. In a non-contiguous event queue, there is potentially one single event at a given time such that gaps between events are possible.

In accordance with the present invention, each event queue may have an event condition, which is a function based on the input of current event signal values and which may use an internal state and which will signal whether a new event should be created on the queue during measurement.

Generally, a system and method in accordance with the present invention may use event signal values provided by sensors already available in the vehicle as they are required for the operation of the vehicle (e.g. throttle position sensor, wheel speed sensor), but it may also use sensors that are specifically added for the purpose of monitoring. In a simulated environment, sensor data may come from actual sensors for the Human-Machine interface, or may be calculated by the simulation model.

In an embodiment of a method according to the present invention, an event log may be generated containing one or more event queues. An event log comprises one or more event queues, and stores the totality of the events during the trip. The data stored in the event log can either be stored in memory to be analyzed after the trip measurement, saved to non-volatile memory for later analysis or be analyzed during the measurement to conserve memory requirements.

The vehicle event signal values are treated in such a way that the influence of environmental variables is minimized, while the effects of driver input are maximized to allow a proper qualitative analysis. In accordance with the present invention, together with the step of buffering event signal values over a limited buffer time and reconstructing events based on the buffered event signal values, one or any combination of the following techniques may be used to achieve this: energy expenditure calculation based on vehicle physical modeling, multidimensional classification, rule-based histogram scoring. Each of them is explained below.

A method in accordance with the present invention may comprise calculating energy expenditure based on vehicle physical modeling. Therefore, a simplified physical model of a vehicle may be used to estimate the energy expenditure of the vehicle based on the event signal values for vehicle speed (acceleration) and slope angle (if available). In a simulated environment, precise data may be already available and used directly.

In another embodiment in accordance with the present invention, a method may be provided wherein analyzing the event signal values comprises multi-dimensional histogram analysis. During a measured trip, a large amount of event signal values is processed and updated in continuous streams. While simple statistics and one-dimensional histograms can provide basic quantitative data, extending the number of dimensions of a histogram and the number of signals of which statistics are accumulated in the histogram may provide more detailed information about the driving style.

In another embodiment in accordance with the present invention, the method may comprising rule-based score calculation. To allow for more advanced scoring of the data gathered in a histogram, rule-based scoring may offer a way to get a more detailed view on driver performance.

In the context of the present invention, a rule is a defined function that can be applied to every leaf (i.e.: bucket) of the histogram tree (or to every event of a particular type in a particular queue), and given the accumulated statistics in that leaf, and the location of the leaf in the tree (the classification) (or given the statistics in that event, and data of the events that precede or follow it in the queue) return a result that is either a negative score, a neutral (zero) score, or a positive score. These rules may be grouped in rule sets, which are linked to specific competences that should be assessed. In a rule set, every rule may be be assigned a weight factor that defines the impact of the rule onto the results for the rule set.

In a further embodiment, the driver behavior diagnostic method may comprise combining a plurality of event scores associated with a driver to generate a driver performance score.

Additionally, the present invention provides a driver behavior diagnostic system comprising a sampling means for sampling event signal values associated with a vehicle and an analyzing means for analyzing the event signal values; characterized in that said sampling means comprises a buffer for buffering event signal values for a limited buffer time and that said analyzing means is adapted for reconstructing events based on the buffered event signal values.

In the context of the present invention, a vehicle may be either an actual vehicle (mostly, but not limited to cars, trucks, motorcycles), or a simulated vehicle where the appropriate event signal values may be calculated based on a simulation model.

The event signal values may be acquired by connecting to an existing in-vehicle network (e.g. CAN, FlexRay, K-line), by sampling directly connected sensors, or by sensors that are integrated into the driver behavior diagnostic system, or by any other means that provide the required vehicle event signal values in a digital format. The driver behavior diagnostic system may be integrated into an existing vehicle ECU or into a simulation unit.

In an embodiment in accordance with the present invention, said analyzing means may be adapted for generating an event queue by means of a function triggering the creation of a new event in the event queue.

A system according to the present invention may further comprise an event log containing one or more event queues.

In an embodiment in accordance with the present invention, the driver behavior diagnostic system may comprise means for calculating energy expenditure based on vehicle physical modeling.

Further in an embodiment in accordance with the present invention, the driver behavior diagnostic system may comprise analyzing means adapted for providing multi-dimensional histogram analysis.

Further, a driver behavior diagnostic system according to the present invention may comprise analyzing means adapted for providing rule-based score calculation.

The qualitative data (e.g. event log data, analysis data) that are generated by the driver behavior diagnostic system may be made available to the driver and the fleet manager using a direct user interface for real-time feedback, by providing a way to extract data locally from the driver behavior diagnostic system (e.g. using a memory card or an interface to an external CPU), or by integrating a telematics device that can forward the data to a central storage. This telematics device may be integrated with the driver behavior diagnostic system, into an existing vehicle ECU or into a simulation unit.

### Detailed description of a preferred embodiment:

Generally, the driver behavior diagnostic system is installed in an actual vehicle, allowing for permanent monitoring of driver skill and attitude. The sampling means for sampling event signal values associated with the vehicle and the analyzing means for analyzing the event signal values can be integrated into a single device, and a connection via a telematics module (either external or integrated into the analyzer device) is used to forward the results of the analysis to a central storage location.

The data generated by the analyzing means are stored in a central location, which can provide reports on the results to the drivers themselves, the fleet responsible, qualified trainers (either internal to the company that owns a fleet, or external experts that provide assessment and training services). The analyzed results consist of the combination of a concise, environment-independent score for driving skill and attitude and a number of quantitative statistics.

During operation, the driver behavior diagnostic system gathers a number of simple quantitative statistics for each of the acquired event signals. The signals are also preprocessed into specific data structures that form the basis of the qualitative scoring. These can be mapped into meaningful statistics about the recording trip (e.g. maximum accelerator pedal position, average engine speed, number of gear changes).

Conditional sampling of signals can be used, where an event signal value is only sampled if a predefined condition is met (e.g. speed of the vehicle when moving, distance covered while braking).

Event signal values are sampled at a predefined rate, which is chosen related to the scoring methods that are used. In general, a sampling rate of 10Hz is used, but depending on the requirements a different sample rate may be chosen. During each sampling cycle, the event signal values are sampled and used to update in-memory signal statistics. The current event signal values are then integrated into the scoring structures which are later used to compute the eventual scores.

Depending on the processing and memory capacity of the device, the scoring calculation can either be implemented at the end of a monitoring cycle, or be partly computed during each sample cycle.

In combination with buffering event signal values over a limited buffer time ("sliding window") and reconstructing events based on the buffered event signal values (below called "event classification"), the event signal values are also used as the basis for vehicle physical modeling, multidimensional classification, and rule-based histogram scoring (also outlined further below).

### Event classification:

Driver actions are the result of a decision making process that is comparable to the OODA loop, which stands for Observe-Orient-Decide-Act and which is a formalized decision making procedure that is useful in to any situation where a practiced decision-making process is necessary. In this decision making process, the events performed by the driver are the result of the observation, orientation and decision process of the driver. Analysis of specific events can reveal information on the decision making process that precedes the event.

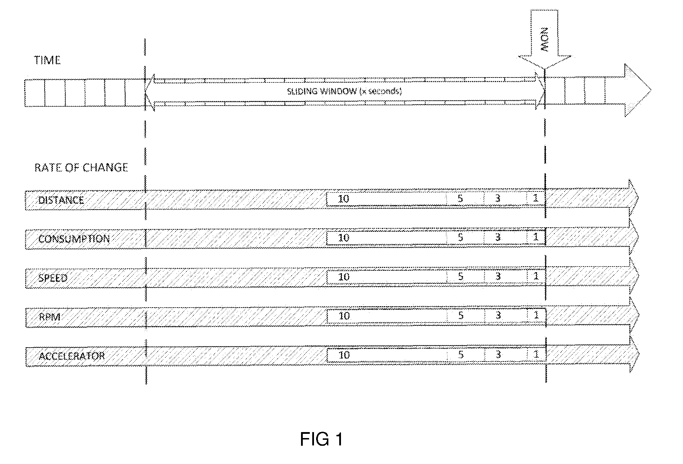

To be able to analyze the events, there is a need to discern the individual events from the vehicle event signal values that are available. Event classification provides lists of events, as reconstructed from the input of vehicle signal data during each sampling cycle, whereby the significance of the event is at least partly enriched by information buffered in the "sliding window" (see FIG 1).

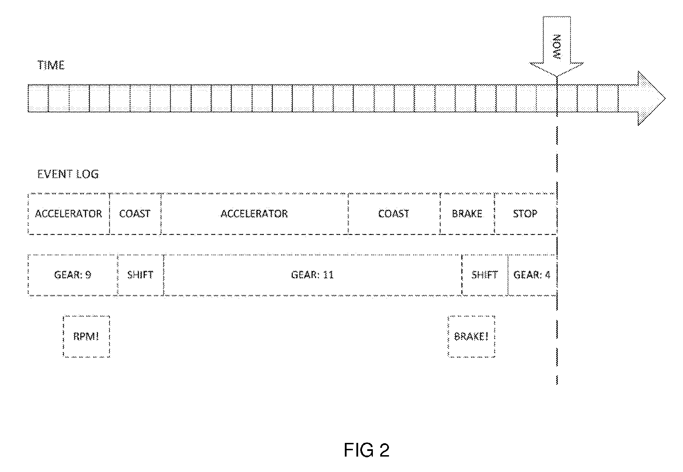

Detailed information about the actions of the driver is provided by an event log (see FIG 2) that reconstructs events based on the event signal values. These reconstructed events are stored in an event queue.

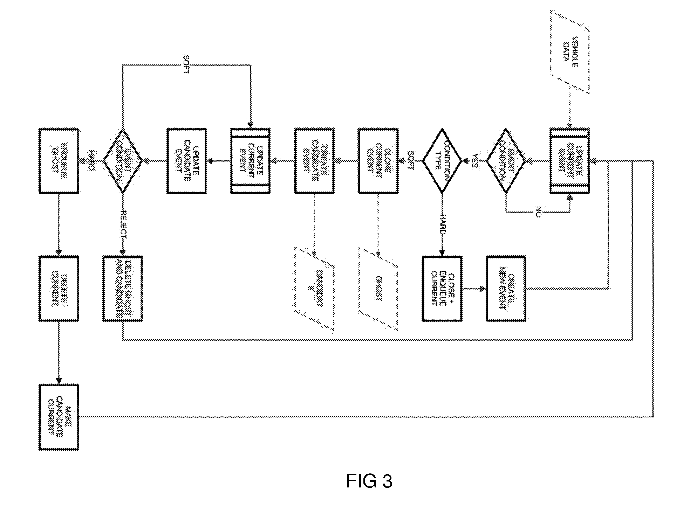

As illustrated in FIG 3, each event queue has an event condition, which is a function based on the input of current signal data and which may use an internal state and which will signal whether a new event should be created on the queue during measurement.

An event has a specific start and end time during the measurement, and contains a number of statistics depending on the type of event. These statistics can include
- Signal values at specific times of the event (e.g.: at start, at end, 3 seconds after start...)
- Signal statistics for values that are updated during the event (e.g.: sum, average, min/max ...)
- Computed values based on the sliding window at specific times of the event (e.g.: deceleration during first 3 seconds of an event) and statistics based on these values.

### Vehicle physical modeling:

The parameters that are used for calculating energy expenditure based on vehicle physical modeling are:
1. Vehicle mass
2. Tyre rolling resistance factor
3. Drag Area (Cd x front surface area)

Each sample cycle, based on the measured acceleration, slope angle and vehicle model an estimate of the current force (magnitude and direction) is calculated. The force magnitude, associated time, travelled distance and used fuel are then classified into a multidimensional classification structure (see following) using the direction (forward/reverse), driving state (drive/coast/brake/stop), engaged gear, engine speed and engine load.

At the end of the measured trip, a number of statistics are calculated that are indicative of the performance depending on a number pre-set rules that are defined per target group. E.g.:
- Ratio of total energy spent / energy lost while braking
- Ratio of total energy spent / energy in green RPM zone
- Ratio of total energy spent / potential energy in consumed fuel

### Multidimensional classification:

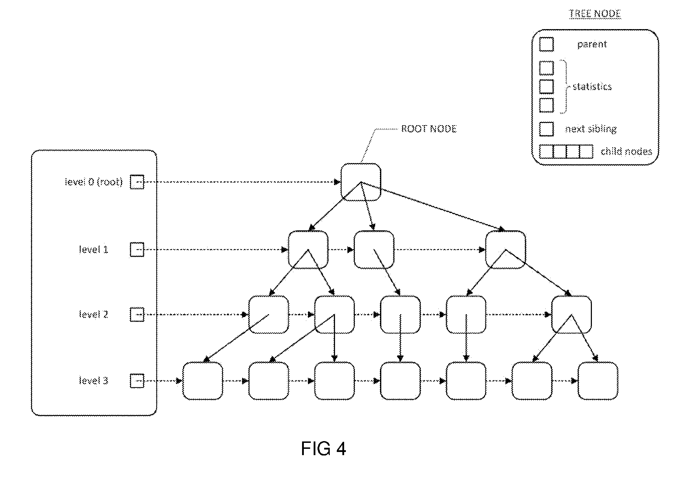

As the number of possible classifications within a multidimensional histogram grows quickly, the implementation of the histogram is based on an N-ary tree implementation (see FIG 4) with the following properties:
- Only classifications (buckets) with actual values are created, limiting memory requirements
- Implementation of tree nodes by means of hash tables for children allows for non-preset categories, minimizing memory for varied sets and O(n) insertion performance
- As the number of classifications is fixed, the depth of all leafs is fixed and the nodes at the same depth are linked to the same classification. A linked list between the nodes of every level is implemented, allowing for fast traversal of the nodes at a specific level.
- Each leaf in the tree with depth N can be referenced by a unique set of N indices, based on the node levels in the tree.
- Each leaf contains a number of signal statistics that are updated during the measurement.
- Each node contains the summation of the statistics of all its child nodes, by definition the root node contains the summary of all the statistic data in the histogram.

Each level in the histogram tree represents a dimension in the histogram. Every level has an associated classification function with current signal data as input, and a classification index/identifier as output. After every sampling cycle, the result of each classification function (one for each level) is added to a set of indices, the "location". Based on the location, the leaf is retrieved (if it already exists), or newly created (including any nodes on the path to the leaf). The statistic data in the leaf is then updated, as are all the nodes on the path to the root node.

If the total number of nodes grows above a preset or dynamic threshold, the highest level of the histogram can be discarded:
- The classifier for that level is deactivated
- The linked list for the level just above is traversed to clear all references to children
- The linked list for the pruned level is traversed to reclaim all memory allocated to the nodes

Due to the summary data that is available in all nodes, the pruning does not require lengthy recalculation of statistic values. After the deactivation of the classifier, the histogram is in a consistent state and can be directly used for further processing. Unlinking and reclaiming of memory does not have to be complete for the histogram to be usable, making it possible for that part to be dealt with in a lower priority process or a different thread.

To extract meaningful simplified data from the histogram, the structure can be reduced via a query mechanism. The query mechanism is based on the indices that are generated by the classifiers: for each level, the following is indicated:
- if it should be included in the result
- which indices should be part of the result (selection)
- which indices should be mapped into a different index (grouping)

A query can either create a partial copy of the histogram in memory, or can just summarize the statistics of the nodes that fall within the query bounds into a single structure. The data structure of the existing histogram is not changed.

At the end of each measured trip, a number of statistics are computed using the generated histogram data that are indicative of driver performance according to a number of pre-set rules that are defined per target group, e.g. amount of distance covered when accelerating above a certain threshold in engine green zone vs. amount of distance covered outside of green zone in all but highest gear with acceleration above the same threshold.

The histogram data can also be used for rule-based scoring, which is explained below.

### Rule-based histogram scoring:

At the end of each measured trip, the defined rules are applied to the histogram tree by traversing the highest-level linked list of nodes and computing the score for each node. For each rule, the following information is gathered:
- the number of nodes that have been processed
- the number of times a positive score was returned
- the number of times a negative score was returned
- the total of all positive scores
- the total of all negative scores

When all nodes are processed, the absolute information gathered above is used to compute a number of auxiliary indicators which include:
- difference between positive/negative occurrences
- difference between positive/negative scores
- relative amount of positive vs. negative occurrences
- relative amount of positive vs. neutral occurrences
- relative amount of negative vs. neutral occurrences
- relative summation of positive scores vs. negative scores

The results for the rules can be tallied into a rule set result by using the supplied weight factor. A rule set result can be mapped to a chosen scale (e.g.: 0 to 100%, F to A+, 0 to 5 stars ...) that can be presented to the end user as part of the assessment.

### Rule-based event scoring:

At the end of each measured trip, the defined rules are applied to their respective event queues and event types. For each rule, the following information is gathered:
- the number of events that have been processed
- the number of times a positive score was returned
- the number of times a negative score was returned
- the total of all positive scores
- the total of all negative scores

When all events are processed, the absolute information gathered above is used to compute a number of auxiliary indicators which include:
- difference between positive/negative occurrences
- difference between positive/negative scores
- relative amount of positive vs. negative occurrences
- relative amount of positive vs. neutral occurrences
- relative amount of negative vs. neutral occurrences
- relative summation of positive scores vs. negative scores

The results for the rules can be tallied into a rule set result by using the supplied weight factor. A rule set result can be mapped to a chosen scale (e.g.: 0 to 100%, F to A+, 0 to 5 stars ...) that can be presented to the end user as part of the assessment.

## Claims

1. A driver behavior diagnostic method comprising sampling event signal values associated with a vehicle and analyzing the event signal values;
**characterized in that** sampling the event signal values comprises buffering them over a limited buffer time and that analyzing said event signal values comprises reconstructing events based on the buffered event signal values.

2. A driver behavior diagnostic method according to claim 1, wherein reconstructing events comprises generating an event queue by means of a function triggering the creation of a new event in the event queue.

3. A driver behavior diagnostic method according to claim 2, comprising generating an event log containing one or more event queues.

4. A driver behavior diagnostic method according to any of the above claims, comprising calculating energy expenditure based on vehicle physical modeling.

5. A driver behavior diagnostic method according to any of the above claims, wherein analyzing the event signal values comprises multi-dimensional histogram analysis.

6. A driver behavior diagnostic method according to any of the above claims, further comprising rule-based score calculation.

7. A driver behavior diagnostic method according to any of the above claims, further comprising combining a plurality of event scores associated with a driver to generate a driver performance score.

8. A driver behavior diagnostic system comprising a sampling means for sampling event signal values associated with a vehicle and an analyzing means for analyzing the event signal values;
**characterized in that** said sampling means comprises a buffer for buffering event signal values for a limited buffer time and that said analyzing means is adapted for reconstructing events based on the buffered event signal values.

9. A driver behavior diagnostic system according to claim 8, wherein said analyzing means is adapted for generating an event queue by means of a function triggering the creation of a new event in the event queue.

10. A driver behavior diagnostic system according to claim 9, comprising an event log containing one or more event queues.

11. A driver behavior diagnostic system according to claims 8 to 10, comprising means for calculating energy expenditure based on vehicle physical modeling.

12. A driver behavior diagnostic system according to any of the above claims, comprising analyzing means adapted for providing multi-dimensional histogram analysis.

13. A driver behavior diagnostic system according to any of the above claims, comprising analyzing means adapted for providing rule-based score calculation.
